# EUROPEAN PATENT APPLICATION

(11) **EP 4 311 636 A1**
(43) Date of publication of application: **31.01.2024**
(21) Application number: 22187827.5
(22) Date of filing: 29.07.2022
(51) Int. Cl.: B25J 21/00, E04H 5/02

(54) **CONTAINER-BASED MANUFACTURING SYSTEM**

(71) Applicant: fruitcore robotics GmbH, 78467 Konstanz (DE)
(72) Inventor: RIEGGER, Jens, 78467 Konstanz (DE); FREY, Manuel, 78467 Konstanz (DE)
(74) Representative: Grünecker Patent- und Rechtsanwälte PartG mbB

(57) **Abstract**

The present invention relates to a manufacturing system (1) with a first container (2) and an industrial robot (3) arranged inside the first container (2). The industrial robot (3) is configured to move workpieces (4) inside the first container (2). The first container (2) is integrally movable with the industrial robot (3) arranged therein.

## Description

The present invention relates to a manufacturing system with an industrial robot. The present invention also relates to a method of building a manufacturing system and a use of an industrial robot in a manufacturing system.

Manufacturing systems comprise automation components, for example, industrial robots, the operation of which has to be carefully controlled to guarantee high yield at desired qualities and to avoid accidents and production downtimes. An industrial robot includes a robot controller and a manipulator and is programmed to move the manipulator along a predetermined operating path.

Known applications for such an industrial robot are the processing of workpieces, for example, cutting including drilling and milling, welding, or soldering. To use an industrial robot for such applications, it is necessary to isolate the working space around the industrial robot for operator safety.

Conventionally, individual frame elements are designed for each robot working space. However, this is expensive and complex. Kawasaki Robotics. Robocon: Plug&Play-Roboter-schweißen aus dem Schiffscontainer. [retrieved on 2022-06-22]. Retrieved from <Automa-tionspraxis.industrie.de, https://automationspraxis.industrie.de/news/robocon-plugplay-roboter-schweissen-aus-dem-schiffscontainer/#> discloses a welding robot provided in an ISO container.

Industrial robots are also used for workpiece conveying and handling applications, such as feeding and removing workpieces to processing means or performing end-of-line operations including separating, moving, and palletizing workpieces. EP 3 476 556 A1 discloses a robot in an automated manufacturing system that is formed by a single control cabinet or by multiple horizontally linked control cabinets. However, the aforementioned system does not allow for transportation of the manufacturing system with pre-installed robots, but requires a local assembly of the system after delivery.

It would be desirable to provide a manufacturing system that can be assembled in a modular way and at the same time facilitates its transport.

According to a first aspect, there is provided a manufacturing system with a first container. An industrial robot is arranged inside the first container. The industrial robot is configured to move workpieces inside the container. The first container is integrally movable with the industrial robot arranged therein.

The first container may be an ISO container, in particular, an ISO container according to ISO standard 668.

The first container may have the shape of an elongated cuboid.

The first container may be a recycled container.

The first container may comprise one or more workpiece openings. The workpiece openings may be adapted such that the workpieces are transportable through the workpiece openings into the first container and out of the first container. The first container may receive a workpiece, the industrial robot grips the workpiece and performs one or more production steps of an automated production line with the workpiece. The production step may include one or more of conveying workpieces, packaging workpieces and commissioning workpieces.

The workpiece opening may be an opening in the side of the first container, such as an aperture and/or breakthrough on a sidewall of the first container. The workpiece opening may have a vertical and/or horizontal extension between 0.1 metres to 2.4 metres, preferably between 0.5 metres to 1.5 metres.

The manufacturing system further comprises a cover adapted to close a workpiece opening of one or more workpiece openings during transport of the first container. The cover may be a door or a detachable cover. A sealing means may be provided between the cover and the workpiece opening so that the workpiece opening is sealed, preferably watertight. The use of a cover, in particular a sealed cover, may enable weather-independent outdoor use and/or transport.

The industrial robot may have working range to move a workpiece to a workpiece opening of the one or more workpiece openings.

The industrial robot may be configured to operate within a limited working range defined by the container. The container may include one or more sensors at the one or more workpiece openings adapted to detect whether a movable portion of the industrial robot is outside of the limited working range. The detection may be signalled to a controller adapted to stop the industrial robot. This may enable protection of humans, such as machine operators, from being injured by the industrial robot.

The industrial robot may be configured to perform end-of-line operations on a workpiece, preferably including one or more of: separating, sorting, erecting, packing, and palletising of workpieces, in particular parts or packaging.

The first container may comprise a base frame, a base plate, and a plurality of walls arranged on the base frame. A coupling means, preferably a coupling opening, may be provided on the base frame. The coupling opening may be adapted to receive a twistlock fastener.This may facilitate transportation and assembling of the first container with additional containers.

The coupling means may allow a gripping tool of a transport means, in particular a truck, a freighter, or a crane, to engage with the coupling means. Hence, the coupling means may enable the transportation of the first container loaded with the industrial robot.

A carrier frame may be connected to the base frame. The industrial robot may be fixed to the carrier frame. The carrier frame may be a perforated plate. The use of a perforated plate with perforations facilitates the mounting of the industrial robot in the first container.

The manufacturing system may further comprise a second container arranged next to the first container. The second container may be arranged on top of the first container. The second container may be arranged under the first container. Stacking containers may allow the limited production space to be better utilized.

Any indications herein regarding "upper", "top", "lower", "bottom", "under" and "side" are concerning a vertical direction being the height direction in an upright orientation of the first container. In the upright orientation of the first container, the longest edges of the first container are in the horizontal plane. The vertical direction may extend perpendicular to a horizontal plane including a first horizontal direction constituting a width direction and a second horizontal direction constituting a depth direction of the first container. The first and second horizontal directions may be perpendicular to each other.

The second container may be aligned, in particular vertically aligned, with the first container.

The first container and the second container may be arranged such that their workpiece openings form an interface opening. The interface opening may be adapted to allow the transport of workpieces from the first container to the second container.

The manufacturing system may further comprise one or more transporting means arranged next to or between the first and second container. The transporting means may be adapted to transport the workpieces to or from the second container, preferably between the second container and the first container.

The manufacturing system may further comprise a processing machine arranged in the second container. The processing machine may be configured to modify, i.e., process, a workpiece previously moved by the first industrial robot in the first container. The processing machine may be a second industrial robot, such as a welding or cutting robot. The modification of the workpiece performed by the processing machine in the second container may comprise at least one of welding, drilling, cutting and milling.

The manufacturing system may further comprise coupling means on the second container. In addition, a fastener engaging with the coupling means, in particular an elongated coupling opening of the coupling means, may be provided. The fastener engaging with the coupling means may enable the first container and the second container to be detachably connected.

The fastener may comprise a rotatable gripping arm arranged to be movable relative to the first and second container. The rotatable gripping arm may be receivable by an elongated coupling opening of the first container and the second container. The fastener may be a twist-lock.

The fastener may be a container bridge clamp.

At least one of the first container and second container may include one or more air conditioning devices. The one or more air conditioning devices are configured to control at least one temperature and/or humidity in the first and/or second container. The use of the one or more air conditioning devices may enable to achieve suitable environmental conditions for the industrial robot or respective work pieces. At least one of the one or more environmental devices may be a ventilator or a heating, ventilation, and air conditioning (HVAC) system. The ventilator or HVAC system may be installed on at least one of the sidewalls of the first or second container.

According to a second aspect, there is provided a method of building a modular manufacturing system. The method includes a step of providing a first container with an industrial robot arranged therein. The industrial robot is adapted to move workpieces. The method includes a step of integrally moving the first container with the industrial robot arranged therein. Thus, the modular manufacturing system may be moved to be arranged at a location, where the industrial robot may be adapted to pick up locally provided workpieces and move same to a location in the container for further processing.

The method may further comprise a step of providing a second container, such that the second container is arranged next to the first container.

The method may further comprise a step of operating the industrial robot to move workpieces.

The method may further comprise a step of transporting workpieces from the second container to the first container or vice versa.

The step of arranging the second container next to the first container may comprise stacking the second container on the first container. Alternatively, the step of arranging the second container next to the first container may comprise stacking the second container on the first container.

The step of arranging the second container next to the first container may comprise arranging the first container on a side of the second container.

The step of arranging the second container next to the first container may comprise connecting the second container to the first container.

The step of operating the industrial robot may comprise palletising cartons on a pallet.

The step of transporting workpieces may comprise transporting the pallet having the cartons from the first container to the second container. The workpieces may be transported via a transport means including at least one a conveyer belt or a vehicle, such as a forklift truck.

According to a third aspect, there is provided a use of an industrial robot. The industrial robot is integrated into a container of a container-based manufacturing system. The container-based manufacturing system has two or more containers, to perform operations on a workpiece. Each container may comprise an industrial robot performing subsequent handling or processing steps of the workpiece.

The operations may include one or more of separating, sorting, erecting, packing, and palletising of workpieces, such as parts or cartons.

Examples will now be further described with reference to the figures.
Figure 1 illustrates a schematic perspective view of a manufacturing system according to an embodiment of the present invention.
Figure 2 illustrates a schematic perspective view of a first container, which may be used in a further embodiment of the manufacturing system according to Figure 1.
Figure 3 illustrates a schematic perspective view of a manufacturing system according to a further embodiment of the present invention.
Figure 4 illustrates a schematic perspective view of a manufacturing system according to a further embodiment of the present invention.
Figure 5 illustrates a schematic perspective view of a plurality of containers, which may be used in a further embodiment of the manufacturing system according to Figures 1, 3, or 4.
Figure 6 illustrates a schematic perspective view of a plurality of containers, which may be used in a further embodiment of the of the manufacturing system according to Figures 1, 3 to 5.
Figure 7 illustrates a schematic perspective view of a fastener, which may be used in a further embodiment of the of the manufacturing system according to Figures 5 or 6.
Figure 8 illustrates a schematic perspective view of a fastener, which may be used in a further embodiment of the of the manufacturing system according to Figures 5 or 6.

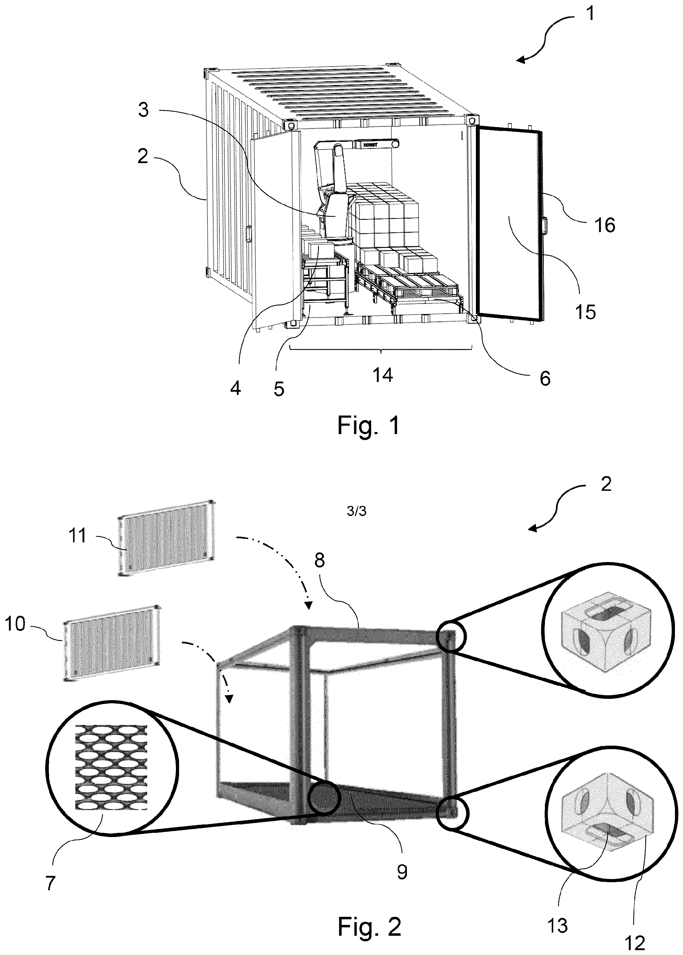

Figure 1 schematically shows an embodiment of a manufacturing system 1. The manufacturing system 1 comprises a first container 2, in particular an ISO container. An industrial robot 3 is arranged inside the first container 2.

The industrial robot 3 is configured to move workpieces 4 inside the first container 2. According to the example shown in Figure 1, the industrial robot 3 is a palletizing robot configured to palletize workpieces 4, for example, cartons or packages, from a storage 5 onto a pallet 6, for example, a pallet according to EN 13698.

The industrial robot 3 is integrally movable with the first container 2. The industrial robot 3 may be fixed to a carrier frame 7 of the first container 2.

Figure 2 illustrates a schematic perspective view of a first container 2, which may be used in a further embodiment of the manufacturing system 1 according to Figure 1. As shown in Figure 2, the first container 2 has the shape of an elongated cuboid and comprises a base frame 8, a base plate 9, and a plurality of walls arranged on the base frame 8. The walls may include sidewalls 10 and an upper wall 11. The carrier frame 7 is connected to the base frame 8. The carrier frame 7 may be formed as a perforated plate to facilitate the mounting process of the industrial robot 3. In other examples, the industrial robot 3 may be directly connected to the base plate 9, the base frame 8 or to a sidewall 10.

As further shown in Figures 1 and 2, the first container 2 comprises coupling means 12 with coupling openings 13. These coupling means 12 have a cuboid shape and are provided on respective edges of the base frame 8. The coupling means 12 are integrally formed with the base frame 8. These coupling means 12 enable transportation of the first container 2 loaded with the industrial robot 3. A gripping tool of a transport means, in particular a truck, a freighter or a crane, may engage with the coupling means 12.

Referring to Fig. 1, the first container 2 may comprise a workpiece opening in form of an aperture 14 of the first container 2. The entrance 14 is adapted such that the workpieces 4 are transportable through the aperture 14 into the first container 2 and out of the first container 2. The aperture 14 may also have a shape to allow a person to pass through.

A cover in form of a door 15 is provided to close the aperture 14. The door 15 is swingably attached to the base frame 8. The door 15 may have a sealing means 16 provided on its edges to seal the first container 2 when the door 15 is in a closed state. This facilitates transportation of the first container 2 having the industrial robot 3, because the first container 2 can be transported outdoors, such as on a freighter including a cargo ship or a cargo truck.

The workpieces 4 may be delivered from a production line or a warehouse to the storage 5 via the aperture 14. Alternatively, the workpieces 4 may be transported to a production line or a warehouse from the storage 5 via the aperture 14.

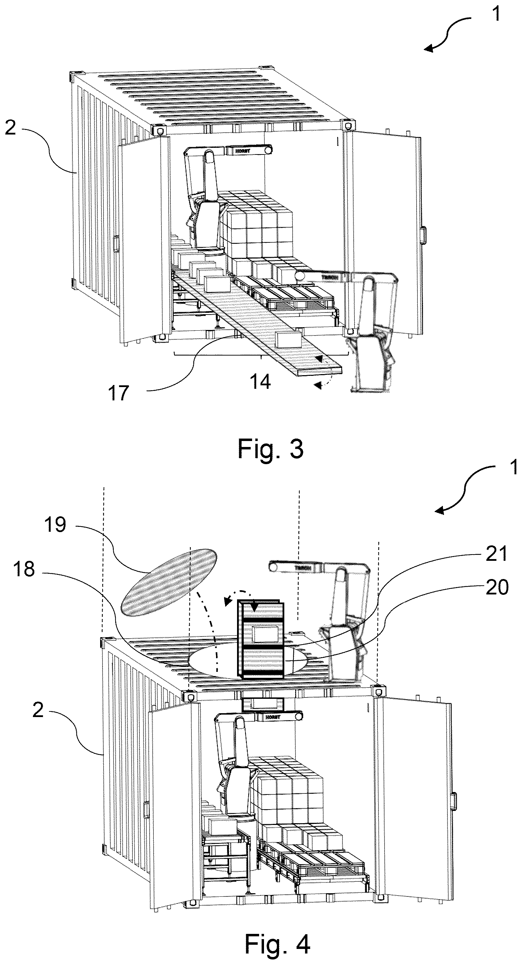

Figure 3 illustrates a schematic perspective view of a manufacturing system 1 according to a further embodiment of the present invention. According to the example shown in Figure 3, the transportation through the aperture 14 is realized by a transporting means, for example, a conveyor belt 17. The conveyer belt 17 extends through the aperture 14. In other examples, the conveyer belt 17 may be arranged next to the aperture 14. The conveyer belt 17 can be at least one of operated forwards and backwards. In other examples a vehicle, such as a forklift truck may be used for transportation. This may enable the transportation of a pallet 6 supporting the workpieces 4.

Figure 4 illustrates a schematic perspective view of a manufacturing system 1 according to a further embodiment of the present invention. As shown in Figure 4, a breakthrough 18 serves as workpiece opening in addition to or as an alternative to the aperture 14 shown in Figure 3. The breakthrough 18 is provided on the upper wall 11 of the first container 2. In other examples, the breakthrough 18 is provided on a sidewall 10 or on the base plate 9. As further shown in Figure 4, a detachable cover 19 is provided to close the breakthrough 18. Similar to the door 15, the detachably cover may have a sealing element (not shown) around its boundary. The breakthrough 16 is shown to have a spherical shape. Alternatively, the breakthrough 18 may have an elongated or rectangular shape.

Similar to the example shown in Figure 3, a conveyor belt 20 is provided next or through the breakthrough 18. In contrast to the conveyer belt 17 shown in Figure 3, the conveyer belt 20 according to the present example is provided with a plurality of cleats 21 to ensure that the workpieces 4 are transported safely upwards or downwards on the conveyor belt 21.

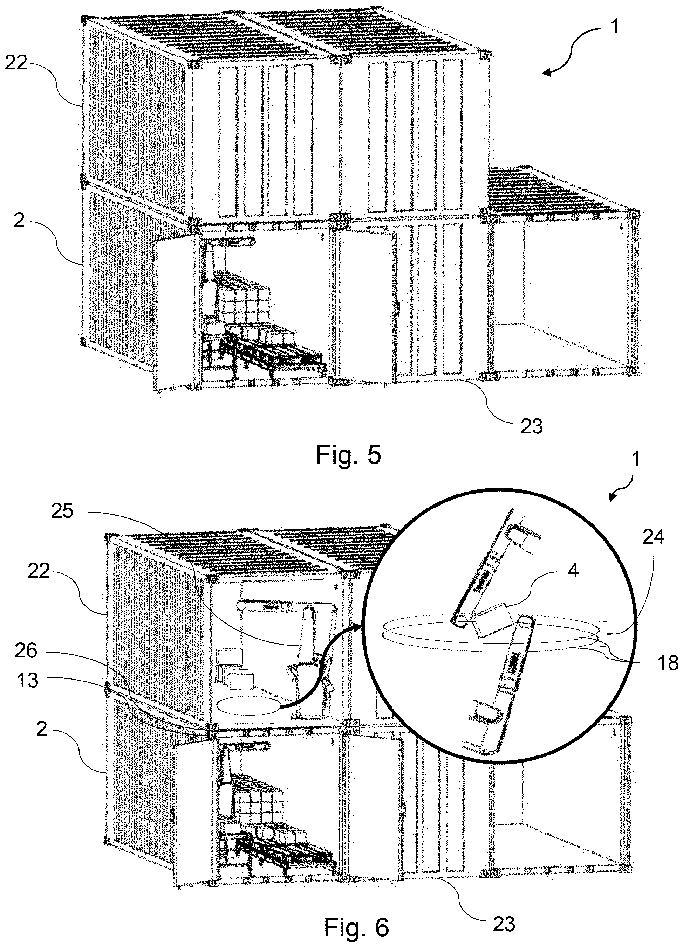

Figures 5 and 6 illustrate a schematic perspective view of a plurality of containers, which may be used in further embodiments of the manufacturing system 1 according to Figures 1, 3 or 4. As shown in Figure 5 and 6, a second container 22 may be arranged next to the first container 2 as described with respect to any of Figures 1 to 4. The second container 22 has a base frame which has the same size and shape as the base frame 8 of the first container 2, thus allowing a modular assembly of the first container 2 with the second container 22.

In the illustrated examples, the second container 22 is directly arranged on top of the first container 2. A third container 23 is arranged on a side of the first container 2. Alternatively, the third container 23 me be arranged in between the first container 2 and the second container 22. Similar, the second container 22 may be arranged on a side of the first container 2.

The second container 22 may comprise a processing machine (not shown) to modify, i.e., process, a workpiece 4 that has been previously moved by the industrial robot 3 in the first container 2. The modification of the workpiece 4 may comprise at least one of welding, drilling, cutting and milling.

According to an example, the industrial robot 3 in the first container 2 is controlled isolated from the other containers, i.e., from the machines provided in the other containers, in the manufacturing system 1.

Alternatively, work performed in at least some of the containers is coordinated. For example, as shown in Fig. 6, the first container 2 and second container 22 are each provided with a breakthrough 18. These breakthroughs 18 are arranged to form an interface opening 24. The interface opening 24 is adapted to allow the transport of workpieces 4 from the first container 2 to the second container 22, and/or vice versa.

As illustrated, the second container 22 is provided with a second industrial robot 25. The (first) industrial robot 3 of the first container 2 and the second industrial robot 25 of the second container 22 may be configured to directly hand-over workpieces 4, as shown in Figure 6. In another example, a transporting means, for example, the conveyor belt 20 shown in Fig. 4, is used to transport the workpieces 4 from the first container 2 to the second container 22.

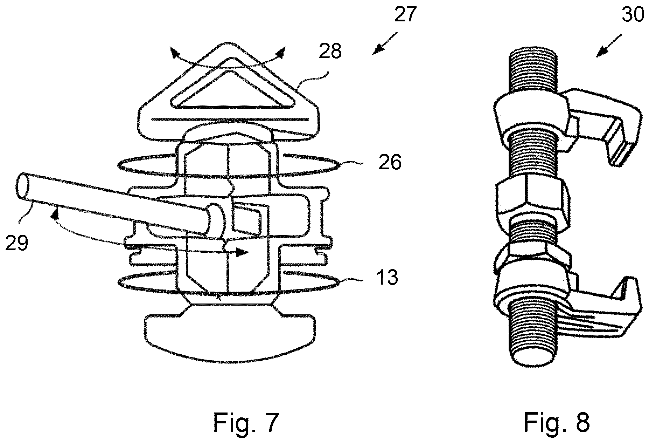

Figures 7 and 8 illustrate a schematic perspective view of fasteners, which may be used in further embodiment of the of the manufacturing system 1 according to Figures 5 or 6. The fasteners may be used to fix at least the first container 2 and the second container 22 to one another. These fasteners engage with the coupling means 12, in particular with an elongated coupling opening 13 of the first container 2 and an elongated coupling opening 26 of the second container 22, so that the first container 2 and the second container 22 are detachably connected.

Figure 7 shows a twist-lock 27 serving as a fastener. The twist-lock 27 comprises a rotatable gripping arm 28. The gripping arm 28 is arranged to be movable relative to the first container 2 and the second container 22. The gripping arm 28 is receivable by an elongated coupling opening 13 of the first container 2 and an elongated coupling opening 26 of the second container 22. The gripping arm 28 may be rotatable by means of a handle 29 to create or release a form-fit connection between the first container 2 and the second container 22.

Alternatively, a bridge clamp 29 as shown in Figure 8 may be used to fix at least the first container 2 and the second container 22 to one another.

## Claims

1. A manufacturing system (1) comprising:
a first container (2),
an industrial robot (3) arranged inside the first container (2),
wherein the industrial robot (3) is configured to move workpieces (4) inside the container (2), wherein the first container (2) is integrally movable with the industrial robot (3) arranged therein.

2. The manufacturing system according to claim 1, wherein the first container (2) comprises one or more workpiece openings (14, 18), wherein the workpiece openings (14, 18) are adapted such that the workpieces (4) are transportable through the workpiece opening (14, 18) into the first container (2) and out of the first container (2).

3. The manufacturing system according to claim 2, further comprising a cover (15, 19) adapted to close a workpiece opening of the one or more workpiece openings (14, 18) during transport of the first container (2).

4. The manufacturing system according to any of claims 2 to 3, wherein the industrial robot (3) has a working range to move products to a workpiece opening of the one or more workpiece openings (14, 18).

5. The manufacturing system according to any one of the preceding claims, wherein the industrial robot (3) is configured to perform end-of line operations on a workpiece (4), preferably including one or more of: separating, sorting, erecting, packing and palletising of workpieces, in particular parts or packaging.

6. The manufacturing system according to any one of the preceding claims, wherein the first container (2) comprises
a base frame (8),
a base plate (9), and
a plurality of walls (10, 11) arranged on the base frame (8),
wherein a coupling means (12), preferably comprising an elongated coupling opening (13), is provided on the base frame (8).

7. The manufacturing system according to any one of the preceding claims, further comprising a second container (22) arranged next to the first container (2), preferably on top of the first container (2) or under the first container (2).

8. The manufacturing system according to claim 7, wherein the first container (2) and the second container (22) are arranged such that their workpiece openings (14, 18) form an interface opening (24), wherein the interface opening (24) is adapted to allow the transport of workpieces (4) from the first container (2) to the second container (22).

9. The manufacturing system according to any of the preceding claims, further comprising one or more transporting means (17, 20) arranged next or between the first and second container (2, 22), and adapted to transport the workpieces (4) to or from the second container (22), preferably between the second container (22) and the first container (2).

10. A method of building a modular manufacturing system (1),
providing a first container (2) with an industrial robot (3) arranged therein,
wherein the industrial robot (3) is adapted to move workpieces (4), and
integrally moving the first container (2) with the industrial robot (3) arranged therein.

11. The method according to claim 10, comprising the further steps of
providing a second container (22), such that the second container (22) is arranged next to the first container (2),
operating the industrial robot (3) to move workpieces (4), and
transporting workpieces (4) from the second container (22) to the first container (2) or vice versa.

12. The method according to claim 11, wherein arranging the second container (22) next to the first container (2) comprises stacking the second container (22) on the first container (2).

13. The method according to any one of claims 10 to 12, wherein arranging the second container (22) next to the first container (2) comprises connecting the second container (22) to the first container (2).

14. The method according to any one of claim 10 to 14, wherein operating the industrial robot (3) comprises palletising cartons on a pallet, and
wherein transporting workpieces (4) comprises transporting the pallet having the cartons from the first container (2) to the second container (22).

15. Use of an industrial robot (3), integrated into a container (2) of a container-based manufacturing system (1) having two or more containers (2, 22), to perform operations on a workpiece (4).
